# EUROPEAN PATENT APPLICATION

(11) **EP 4 538 326 A1**
(43) Date of publication of application: **16.04.2025**
(21) Application number: 23819768.5
(22) Date of filing: 02.06.2023
(51) Int. Cl.: C08L 59/00, C08L 21/00, C08L 51/04, C08L 101/00

(54) **RESIN COMPOSITION AND MOLDED ARTICLE**

(30) Priority: 09.06.2022 JP 2022094007
(71) Applicant: GLOBAL POLYACETAL CO., LTD., Tokyo 105-0021 (JP)
(72) Inventor: YAMAMOTO, Yuta, Hiratsuka-shi, Kanagawa 254-0016 (JP); SUNAGA, Daisuke, Hiratsuka-shi, Kanagawa 254-0016 (JP)
(74) Representative: Zimmermann & Partner Patentanwälte mbB
(86) International application number: PCT/JP2023/020625
(87) International publication number: WO 2023/238788

(57) **Abstract**

To provide a resin composition that contains a core-shell elastomer and has excellent flexibility, high weld elongation, and excellent impact resistance, and a molded article formed from the resin composition. A resin composition comprising a polyacetal resin (A) and a core-shell elastomer (B), wherein
the core-shell elastomer (B) has a crosslinking index in a range of 0.24 to 0.30,
the core-shell elastomer (B) has an average secondary particle size of 10 to 250 nm in the polyacetal resin (A), and
an amount of element potassium in the core-shell elastomer (B) is more than 0% by mass and not more than 0.05% by mass.

## Description

### [Technical Field]

The present invention relates to a resin composition and a molded article. In particular, the present invention relates to a resin composition having a polyacetal resin as a main component.

### [Background Art]

Polyacetal resins are used in a wide range of applications as a plastic having excellent mechanical properties, electrical properties, and chemical properties such as chemical resistance.

In order to impart flexibility to a polyacetal resin, consideration has been given to adding an elastomer to the polyacetal resin.

For example, Patent Literature 1 describes a resin composition that includes a polyacetal resin and a core-shell elastomer, wherein when the resin composition is molded into a multipurpose test specimen having a thickness of 4 mm, a flexural modulus measured in accordance with ISO178 is 1700 MPa or less, and when the resin composition is molded into a test specimen with a thickness of 1.6 mm and having a weld portion in the center, a weld elongation when pulled at 10 mm/min in accordance with ASTM D638 is 20% or more.

### [Citation List]

### [Patent Literature]

Patent Literature 1
Japanese Patent Laid-Open No. 2021-011562 A

### [Summary of Invention]

### [Technical Problem]

A molded article obtained from the resin composition described in Patent Literature 1 has excellent flexibility, weld elongation, and impact resistance. However, with the recent advances in technology, there is a demand for a resin composition that can provide a molded article with even better weld elongation and better impact resistance.

The present invention aims to solve above problem, and an object of the present invention is to provide a resin composition that contains a core-shell elastomer and has excellent flexibility, high weld elongation, and excellent impact resistance, and a molded article formed from the resin composition.

### [Solution to Problem]

The present inventors conducted research to address the above-mentioned problems, and as a result, discovered that the problems described above could be solved by adding the core-shell elastomer that has a predetermined crosslinking index in a range, an average secondary particle size, and an amount of element potassium to the polyacetal resin.

Specifically, the problems described above are solved by the following means.
<1> A resin composition comprising a polyacetal resin (A) and a core-shell elastomer (B), wherein
   the core-shell elastomer (B) has a crosslinking index in a range of 0.24 to 0.30,
   the core-shell elastomer (B) has an average secondary particle size of 10 to 250 nm in the polyacetal resin (A), and
   an amount of element potassium in the core-shell elastomer (B) is more than 0% by mass and not more than 0.05% by mass.
<2> The resin composition according to <1>, wherein the polyacetal resin (A) has a melt volume rate (MVR) measured in accordance with ISO1133 at a temperature of 190°C and a load of 2.16 kg of 0.5 to 20 cm³/10 minutes.
<3> The resin composition according to <1> or <2>, wherein the resin composition has a core-shell elastomer (B) content of 5 to 40% by mass.
<4> The resin composition according to any one of <1> to <3>, wherein the core-shell elastomer (B) has a butadiene unit content of 50 to 80% by mass.
<5> The resin composition according to any one of <1> to <4>, wherein in the core-shell elastomer (B), the core comprises a butadiene-containing rubber and the shell comprises an acrylic resin.
<6> The resin composition according to any one of <1> to <5>, wherein the core-shell elastomer (B) comprises a styrene unit.
<7> The resin composition according to any one of <1> to <6>, wherein the core-shell elastomer (B) has a styrene unit content of more than 0% by mass and not more than 5% by mass.
<8> The resin composition according to any one of <1> to <7>, wherein an amount of polyurethane included in the resin composition is 0 to 1% by mass.
<9> The resin composition according to any one of <1> to <8>, wherein
   the resin composition comprises a polyacetal resin (A) and a core-shell elastomer (B),
   the core-shell elastomer (B) has a crosslinking index in a range of 0.24 to 0.30,
   the core-shell elastomer (B) has an average secondary particle size of 10 to 250 nm in the polyacetal resin (A),
   an amount of element potassium in the core-shell elastomer (B) is more than 0% by mass and not more than 0.05% by mass,
   the polyacetal resin (A) has a melt volume rate (MVR) measured in accordance with ISO1133 at a temperature of 190°C and a load of 2.16 kg of 0.5 to 20 cm³/10 minutes,
   the resin composition has a core-shell elastomer (B) content of 5 to 40% by mass,
   the core-shell elastomer (B) has a butadiene unit content of 50 to 80% by mass,
   in the core-shell elastomer (B), the core comprises a butadiene-containing rubber and the shell comprises an acrylic resin,
   the core-shell elastomer (B) comprises a styrene unit,
   the core-shell elastomer (B) has a styrene unit content of more than 0% by mass and not more than 5% by mass, and
   an amount of polyurethane included in the resin composition is 0 to 1% by mass.
<10> A pellet of the resin composition according to any one of <1> to <9>.
<11> A molded article formed from the resin composition according to any one of <1> to <9>.
<12> A molded article formed from the pellet according to <10>.

### [Advantageous Effects of Invention]

The present invention can provide a resin composition that contains a core-shell elastomer and has excellent flexibility, high weld elongation, and excellent impact resistance, and a molded article formed from the resin composition.

### [Description of Embodiments]

A mode for carrying out the present invention (hereinafter, simply referred to as "this embodiment") will now be described in detail. It is noted that this embodiment is an illustrative example for describing the present invention, and the present invention is not limited to only this embodiment.

In addition, in this specification, the meaning of "from ... to" includes the numerical values described before and after "..." as a lower limit value and an upper limit value.

In this specification, various physical property values and characteristic values are assumed to be values as of 23°C, unless otherwise stated.

If the measurement methods and the like described in the standards shown in this specification differ from year to year, unless otherwise stated, those measurement standards shall be based on the standards as of January 1, 2022.

The resin composition of this embodiment is characterized by including a polyacetal resin (A) and a core-shell elastomer (B), wherein the core-shell elastomer (B) has a crosslinking index in a range of 0.24 to 0.30, the core-shell elastomer (B) has an average secondary particle size of 10 to 250 nm in the polyacetal resin (A), and an amount of element potassium in the core-shell elastomer (B) is more than 0% by mass and not more than 0.05% by mass.

With such a configuration, a resin composition having excellent flexibility, high weld elongation, and excellent impact resistance can be obtained.

### <Polyacetal resin (A)>

The resin composition of this embodiment includes a polyacetal resin (A).

The polyacetal resin (A) is not particularly limited, and may be a homopolymer containing only a divalent oxymethylene group as a constituent unit, or may be a copolymer containing a divalent oxymethylene group and a divalent oxyalkylene groups having from 2 to 6 carbon atoms as constituent units.

Examples of the oxyalkylene group having from 2 to 6 carbon atoms include an oxyethylene group, an oxypropylene group, an oxybutylene group, and the like.

In the polyacetal resin, the proportion of the oxyalkylene group having from 2 to 6 carbon atoms with respect to the total number of moles of the oxymethylene group and the oxyalkylene group having from 2 to 6 carbon atoms, is not particularly limited, and may be 0.5 to 10 mol.%.

In order to produce the above polyacetal resin (A), trioxane is usually used as the main raw material. Further, in order to introduce the oxyalkylene group having from 2 to 6 carbon atoms into the polyacetal resin, a cyclic formal or a cyclic ether can be used. Specific examples of the cyclic formal include 1,3-dioxolane, 1,3-dioxane, 1,3-dioxepane, 1,3-dioxocane, 1,3,5-trioxepane, 1,3,6-trioxocane, and the like. Specific examples of the cyclic ether include ethylene oxide, propylene oxide, butylene oxide, and the like. To introduce an oxyethylene group into the polyacetal resin (A), 1,3-dioxolane can be used as the main raw material, to introduce an oxypropylene group, 1,3-dioxane can be used as the main raw material, and to introduce an oxybutylene group, 1,3-dioxepane can be used as the main raw material. In addition, in the polyacetal resin, it is preferred that the amount of hemiformal terminal groups, the amount of formyl terminal groups, and the amount of terminal groups unstable to heat, acids, and bases are small. Here, a hemiformal terminal group is represented by -OCH₂OH, and the formyl terminal group is represented by -CHO.

The polyacetal resin (A) used in this embodiment has a melt volume rate (MVR) measured at a temperature of 190°C and a load of 2.16 kg in accordance with ISO1133 of preferably 0.5 cm³/10 minutes or more, more preferably 0.6 cm³/10 minutes or more, further preferably 0.8 cm³/10 minutes or more, much further preferably 1 cm³/10 minutes or more, and still much further preferably 5 cm³/10 minutes or more. By setting the MVR to be equal to or more than the above lower limit, the productivity of the resin composition tend to be further improved. Further, the polyacetal resin (A) has an MVR of, for example, 30 cm³/10 minutes or less, preferably 20 cm³/10 minutes or less, more preferably 18 cm³/10 minutes or less, further preferably 14 cm³/10 minutes or less, much further preferably 10 cm³/10 minutes or less, and still much further preferably 8 cm³/10 minutes or less. By setting the MVR to be equal to or less than the above upper limit value, it tends to be possible to improve the dispersibility of the core-shell elastomer (B) and to reduce the average secondary particle size of the core-shell elastomer (B).

As the polyacetal resin, in addition to those described above, the polyacetal resins described in paragraphs 0018 to 0043 of Japanese Patent Laid-Open No. 2015-074724 A, the contents of which are incorporated herein by reference, can be used.

The content of the polyacetal resin (A) in the resin composition of this embodiment is preferably 60% by mass or more, further preferably 70% by mass or more, much further preferably 72% by mass or more, and may be 76% by mass or more. The upper limit is preferably 95% by mass or less, more preferably 90% by mass or less, and further preferably 85% by mass or less. By setting within such a range, the effects of this embodiment tend to be more effectively exhibited.

The resin composition of this embodiment may contain only one type of the polyacetal resin, or may contain two or more types of the polyacetal resin. When two or more types are included, it is preferred that the total amount falls within the above ranges.

### <Core-shell elastomer (B)>

The resin composition of this embodiment includes a core-shell elastomer (B). A core-shell elastomer is a polymer with a multilayer structure having a core portion and a shell layer that covers a part or all of the core portion. The Kane Ace series from Kaneka Corporation and the Metablen series from Mitsubishi Chemical Corporation are known core-shell elastomers.

The core-shell elastomer (B) used in this embodiment has a crosslinking index in a range of 0.24 to 0.30, has an average secondary particle size of 10 to 250 nm in the polyacetal resin (A), and an amount of element potassium in the core-shell elastomer (B) is more than 0% by mass and not more than 0.05% by mass. With such a configuration, a molded article having high weld elongation and excellent impact resistance can be obtained.

The core-shell elastomer (B) has a crosslinking index in the range of 0.24 to 0.30. The crosslinking index is preferably 0.25 or more, and preferably 0.29 or less, more preferably 0.28 or less, and further preferably 0.27 or less. The crosslinking index refers to the degree of intermolecular crosslinking in the core portion of the core-shell elastomer. That is, the larger the crosslinking index, the harder the elastomer, and the smaller the crosslinking index, the softer the elastomer. By setting the crosslinking index to be equal to or more than the above lower limit value, weld elongation is higher. This is presumably because when the elastomer is harder, the elastomer is not deformed by the force applied on the weld portion during molding, and the elastomer can maintain its spherical shape. Moreover, by setting the crosslinking index to be equal to or less than the above upper limit value, the impact resistance of the resin composition tends to be further improved.

The crosslinking index of the core-shell elastomer (B) is adjusted based on the polymerization conditions during production of the core-shell elastomer.

The crosslinking index of the core-shell elastomer (B) is calculated from the results measured in accordance with the description in the Examples described later.

The average secondary particle size of the core-shell elastomer (B) in the polyacetal resin (A) is 10 to 250 nm. The average secondary particle size of the core-shell elastomer (B) in this embodiment is the average secondary particle size in the molded article. By setting the average secondary particle size of the core-shell elastomer (B) to 250 nm or less, the core-shell elastomer (B) is dispersed more easily in the polyacetal resin (A), weld elongation is increased, and impact resistance can be improved. This is because when the average secondary particle size of the core-shell elastomer (B) is larger, the core-shell elastomer (B) acts as a fracture starting point in the molded article. Moreover, the interfacial force applied between the core-shell elastomer (B) and the polyacetal resin (A) is also reduced, allowing an increase in weld elongation and an improvement in impact resistance. Such an average secondary particle size of the core-shell elastomer (B) in the polyacetal resin (A) can be achieved by adjusting the selection of the type of core-shell elastomer (B), the fluidity of the polyacetal resin, melt-kneading conditions, and the like.

The average secondary particle size of the core-shell elastomer (B) is preferably 240 nm or less, more preferably 210 nm or less, further preferably 180 nm or less, much further preferably 150 nm or less, and still much further preferably 120 nm or less. Further, the average secondary particle size of the core-shell elastomer (B) is preferably 20 nm or more, more preferably 30 nm or more, further preferably 50 nm or more, much further preferably 80 nm or more, and still much further preferably 100 nm or more.

The average secondary particle size of the core-shell elastomer (B) is measured in accordance with the description in the Examples described later.

The amount of the element potassium in the core-shell elastomer (B) is more than 0% by mass and not more than 0.05% by mass. By setting the amount to be equal to or less than the above upper limit value, the occurrence of fracture starting points in the molded article due to the element potassium can be effectively suppressed. By setting the amount to be equal to or more than the above lower limit value, it tends to be possible to suppress decomposition of the resin when added to the polyacetal resin. The amount of the element potassium in the core-shell elastomer (B) is preferably 0.04% by mass or less, more preferably 0.03% by mass or less, and is preferably 0.01% by mass or more, more preferably more than 0.01% by mass. In this embodiment, an amount equal to or less than the detection limit is given as 0% by mass.

The element potassium in the core-shell elastomer (B) may be contained as a potassium-containing compound, or may be contained as potassium ions or elemental potassium.

The amount of the element potassium in the core-shell elastomer (B) can be obtained, for example, by washing a commercially available core-shell elastomer.

The amount of the element potassium is measured in accordance with the description in the Examples described later.

The type of core-shell elastomer used in this embodiment is not particularly limited, but the core is preferably a rubber-based polymer. The rubber-based polymer preferably contains at least one selected from a butadiene-containing rubber, a butyl acrylate-containing rubber, a 2-ethylhexyl acrylate-containing rubber, and a silicone-based rubber, and more preferably contains a butadiene-containing rubber.

The core-shell elastomer used in this embodiment preferably further contains a styrene unit. By including a styrene unit, the impact resistance of the obtained molded article tends to be improved.

The core-shell elastomer used in this embodiment preferably further has a butadiene unit content of 50% by mass or more, more preferably 60% by mass or more, further preferably 65% by mass or more, and much further preferably 70% by mass or more, and more preferably 80% by mass or less.

In addition, when the core-shell elastomer used in this embodiment contains a styrene unit, the styrene unit content is preferably more than 0% by mass, more preferably 0.5% by mass or more, and is preferably 5% by mass or less, more preferably 3% by mass or less, and further preferably 2% by mass or less.

A total of the butadiene unit, the styrene unit, and a (meth)acrylic acid ester unit (preferably methyl methacrylate) preferably accounts for 98% by mass or more of the core-shell elastomer used in this embodiment.

In the core-shell elastomer used in this embodiment, the shell is preferably a polymer of one or more monomers such as a (meth)acrylic ester (preferably methyl methacrylate) and an aromatic vinyl compound, and more preferably is a polymer (acrylic resin) in which units derived from a (meth)acrylic ester (preferably methyl methacrylate) account for 50% by mass or more of the whole.

In the core-shell elastomer used in this embodiment, the core preferably contains a rubber-based polymer and the shell preferably contains an acrylic resin. When such a core-shell elastomer is used, the effects of the present invention tend to be more effectively exhibited.

The resin composition of this embodiment preferably contains 5% by mass or more of the core-shell elastomer (B), more preferably 10% by mass or more, and further preferably 15% by mass or more. By setting the content to be equal to or more than the above lower limit value, the impact resistance tends to be further improved. The upper limit is preferably 40% by mass or less, much further preferably 30% by mass or less, still much further preferably 28% by mass or less, and may be 24% by mass or less. By setting the content to be equal to or less than the above upper limit value, the impact resistance tends to be further improved.

The resin composition of this embodiment may contain only one type of the core-shell elastomer, or may contain two or more types of the core-shell elastomer. When two or more types are included, it is preferred that the total amount falls within the above ranges.

In the resin composition of this embodiment, the total amount of the polyacetal resin (A) and core-shell elastomer (B) preferably accounts for 95% by mass or more, and more preferably 98% by mass or more. However, the total amount of the polyacetal resin (A) and core-shell elastomer (B) does not exceed 100% by mass.

### <Other components>

The resin composition of this embodiment may contain any conventionally known additives or fillers within a range that does not impair the object of the present invention. Examples of additives and fillers used in this embodiment include a thermoplastic resin other than the polyacetal resin, an ultraviolet absorber, an antioxidant, a stabilizer, a formaldehyde scavenger, an antistatic agent, carbon fiber, glass fiber, glass flakes, potassium titanate whiskers, and the like. Details regarding these may be found in the descriptions in paragraphs 0113 to 0124 of Japanese Patent Laid-Open No. 2017-025257 A, the contents of which are incorporated herein by reference.

It is preferred that the resin composition of this embodiment is substantially free of polyurethane. "Substantially free" means that the content of polyurethane contained in the resin composition is 0 to 1% by mass, preferably 0 to 0.5% by mass, more preferably 0 to 0.1% by mass, and may be 0% by mass. By reducing the content of polyurethane, the weld elongation of the obtained molded article can be further improved.

### <Physical properties of resin composition>

The resin composition of this embodiment preferably has excellent weld elongation. Specifically, when the resin composition of this embodiment is molded into an ASTM tensile test specimen (thickness 1.6 mm) and subjected to a tensile test in accordance with ASTM D638, it is preferable that the weld elongation is 95% or more, 98% or more is preferable, and 100% or more is more preferable. Further, the upper limit of the weld elongation is, for example, 300% or less.

The resin composition of this embodiment preferably has excellent impact resistance. Specifically, according to ISO179-1, the Charpy impact strength of a test specimen having a length of 80 mm × width of 10 mm × thickness of 4 mm, and a notch with a tip radius of r = 0.25 mm is preferably 20 kJ/m² or more, and more preferably 21 kJ/m² or more. The upper limit is not particularly defined, but 50 kJ/m² or less is practical.

The weld elongation and Charpy impact strength are each measured in accordance with the description in the Examples described later.

### <Method for producing resin composition>

The resin composition of this embodiment includes the above-described essential components and, if necessary, the above-described optional components. As the production method, a method is selected so that the average secondary particle size falls within the above range. Any conventionally known method for producing resin compositions may be used to mix and knead these raw materials.

One method for making the average secondary particle size to be within the above range is to mix the polyacetal resin and the core-shell elastomer in a tumbler, extrude the resultant mixture from a melt kneader as strands, and then cut the strands into pellets. At this time, it is preferable to use a twin-screw extruder as the melt kneader, since a single-screw extruder tends to cause secondary agglomeration. It is preferred that the melt kneader have an L/D, which is the ratio of the length L (mm) of the screw to the diameter D (mm) of the same screw, of 20 or more, more preferably 30 or more, and preferably 100 or less, more preferably 70 or less. By setting the L/D to 20 or more, the core-shell elastomer tends to be finely dispersed, and secondary agglomeration of the core-shell elastomer can be effectively suppressed. Further, by setting the L/D to 100 or less, discoloration of the resin composition due to thermal degradation tends to be effectively suppressed. The shape of the die nozzle is also not particularly limited, but in terms of pellet shape, a circular nozzle with a diameter of 1 mm or more is preferable, and a circular nozzle with a diameter of 2 mm or more is more preferable, and a circular nozzle with a diameter of 10 mm or less is preferable, and a circular nozzle with a diameter of 7 mm or less is more preferable.

Further, the melting temperature of the resin composition during melt-kneading is preferably 170°C or higher, more preferably 190°C or higher, and preferably 250°C or lower, more preferably 230°C or lower. By setting the melting temperature to 170°C or higher, melting is sufficient and production volume tends to improve. Further, by setting the temperature to 250°C or less, discoloration of the resin composition due to thermal degradation tends to be effectively suppressed.

Although the screw configuration of the twin-screw extruder is not particularly limited, in one preferred embodiment, the twin-screw extruder may have at least two kneading portions. Each kneading portion has a kneading disk, and mainly contributes to the melting of the resin and the dispersing of the elastomer.

The screw rotation speed during melt-kneading is preferably 50 rpm or more, more preferably 70 rpm or more, more preferably 80 rpm or more, and is preferably 500 rpm or less, more preferably 350 rpm or less. By setting the screw rotation speed to 50 rpm or less, the core-shell elastomer tends to be finely dispersed, and the occurrence of secondary agglomeration tends to be suppressed more effectively. Further, by setting the screw rotation speed to 500 rpm or less, the generation of heat during melt-kneading can be suppressed, and discoloration of the resin composition due to thermal degradation tends to be effectively suppressed. Moreover, the discharge amount is preferably 5 kg/hr or more, more preferably 7 kg/hr or more, and preferably 1,000 kg/hr or less, more preferably 800 kg/hr or less. By setting the screw rotation speed to 5 kg/hr or more, the core-shell elastomer tends to be more finely dispersed, and the occurrence of secondary agglomeration can be effectively suppressed. Further, setting the screw rotation speed to 1,000 kg/hr or less tends to allow the generation of heat during melt-kneading to be effectively suppressed and discoloration of the resin composition due to thermal degradation to be effectively suppressed.

A ratio (Q/Ns) between the screw rotation speed (Ns) and the discharge amount (Q) during melt-kneading depends on the screw diameter and screw configuration of the extruder, but is, for example, preferably 0.5 or more, more preferably 0.7 or more, and particularly preferably 0.9 or more, and is preferably 1.5 or less, more preferably 1.3 or less, and particularly preferably 1.2 or less. The above Q/Ns is particularly preferable in an embodiment in which the screw diameter is 18 to 75 mm (and moreover, 58 mm) and the screw configuration has two kneading portions.

Examples of the kneading machine include a kneader, a Banbury mixer, an extruder, and the like. There are no particular limitations on the various conditions and equipment for mixing and kneading, and the conditions may be determined by appropriately selecting from any conventionally known conditions. The kneading is preferably carried out at a temperature equal to or higher than the melting temperature of the polyacetal resin, specifically, at a temperature equal to or higher than the melting temperature of the polyacetal resin (generally 180°C or higher).

### <Molded article>

The molded article of this embodiment is formed from the resin composition of this embodiment. Usually, the resin composition of this embodiment is directly, or pellets obtained by pelletizing the resin composition are injection molded to form the molded article.

That is, a preferred example of the molded article of this embodiment is an injection-molded article. An injection-molded article is a molded article formed by injection molding, in which a weak portion (weld portion) is usually formed at the portion where the molten resin converges in the mold.

The shape of the molded article is not particularly limited, and can be appropriately selected in depending on the intended use and purpose of the molded article. Examples of the shape include a board shape, a plate shape, a rod shape, a sheet shape, a film shape, a cylindrical shape, an annular shape, a circular shape, an elliptical shape, a gear shape, a polygonal shape, an irregular shape, a hollow shape, a frame shape, a box shape, a panel shape, a cap shape, and the like. The molded article of the present invention may be a component or a finished product.

### <Uses>

Examples of uses of the resin composition of this embodiment and a molded article formed from the resin composition include for automotive parts such as trim clips, seatbelt members, headrest guides, building material parts, electrical/electronic parts, office equipment parts, or parts of miscellaneous goods, as well as for containers for frozen foods and beverages, home appliance such as refrigerator gaskets, hose bands, gaskets, and cable ties.

### [Examples]

The present invention will now be described in more detail with reference to the following examples. The materials, usage amounts, proportions, processing details, processing procedures, and the like shown in the following examples can be changed as appropriate without departing from the spirit of the present invention. Therefore, the scope of the present invention is not limited to the specific examples shown below.

If the measuring equipment and the like used in the examples is difficult to obtain due to discontinuation or the like, measurements can be made using other equipment with equivalent performance.

### 1. Raw materials

The raw materials shown in the following Table 1-1 were used.

**[Table 1-1]**

| Abbreviation | Details |
|---|---|
| F20-03 | Polyacetal resin, MVR: 7.7 cm³/10 min, manufactured by Mitsubishi Engineering-Plastics Corporation |
| F10-EW | Polyacetal resin, MVR: 3.4 cm³/10 min, manufactured by Mitsubishi Engineering-Plastics Corporation |
| A10-03 | Polyacetal resin, MVR: 2.2 cm³/10 min, manufactured by Mitsubishi Engineering-Plastics Corporation |
| F30-03 | Polyacetal resin, MVR: 23 cm³/10 min, manufactured by Mitsubishi Engineering-Plastics Corporation |
| M-910 | Kane Ace M-910, manufactured by Kaneka Corporation, core-shell elastomer |
| EXL-2600 | Paraloid EXL-2600, manufactured by Dow Chemical, core-shell elastomer |
| E-860A | Metablen E-860, manufactured by Mitsubishi Chemical Corporation, core-shell elastomer |
| M-732 | Kane Ace M-732, manufactured by Kaneka Corporation, core-shell elastomer |

The MVR is the melt volume rate measured in accordance with ISO1133 at a temperature of 190°C and a load of 2.16 kg.

### <Analysis of elastomer composition>

The composition of each core-shell elastomer (total composition of core and shell) was analyzed as follows. Based on the amount of each element obtained by organic elemental analysis, the abundance ratio of each constituent component of the core-shell elastomer obtained by pyrolysis GC/MS analysis was calculated and used as a composition ratio. Pyrolysis GC/MS measurement was performed.

The apparatus configuration and conditions for the pyrolysis GC/MS were as follows.

### Apparatus configuration

Heating furnace: EGA/PY-3030D, manufactured by Frontier Lab GC: GC-2030, manufactured by Shimadzu Corporation MS: GCMS-QP2020 NX

### Conditions

Pyrolyzer 600°C
Column:UA-5, 0.25 mm I.D. ×30 m ×0.25 µm
Temperature conditions: 50°C (2 minutes) → 20°C/min → 320°C (10 min)
Flow:1.0 mL/min.
Split: 1:30
Inj /IF: 200°C/300°C

The apparatus and measurement mode for the organic elemental analysis were as follows. Apparatus: vario EL cube, manufactured by Elementar Measurement mode: CHN mode and O mode

The units are % by mass.

The results are shown in Table 1-2 below.

**[Table 1-2]**

| | M-910 | EXL-2600 | E-860A | M-732 |
|---|---|---|---|---|
| MMA (methyl methacrylate) | 22 | 25 | 24 | 24 |
| BA (benzyl acrylate) | 1 | ND | ND | ND |
| Bd (butadiene) | 76 | 74 | 71 | 69 |
| St (styrene) | 1 | 1 | 5 | 7 |

### <Preparation of washed products of M-910>

M-910 washed products A to C shown in Tables 2 to 6 were prepared as follows.

100 parts by mass of M910 was placed in 200 parts by mass of pure water, stirred for 10 minutes using a stirrer, and then subjected to solid-liquid separation by suction filtration. This operation was repeated 5 times for washed product A, 3 times for washed product B, and 1 time for washed product C. The solids obtained by the above operation were dried in a vacuum dryer at 60°C to obtain the samples to be used in each example.

### <Amount of the element potassium in core-shell elastomer>

The amount of the element potassium in the core-shell elastomer used in each example and comparative example was measured using "ZSXminiII" manufactured by Rigaku Corporation.

The unit is % by mass.

"N.D" means equal to or less than the lower detection limit.

### <Core-shell elastomer crosslinking index>

The T₂ relaxation time of each core-shell elastomer used in each example and comparative example was measured using a Minispec mq20 manufactured by Bruker. Measurements were performed at -40°C, 0°C, 23°C, and 80°C, and the T₂ relaxation time at each of those temperatures was obtained. The reciprocal of the slope of an approximate straight line of the plot obtained when the measurement temperature is represented on the X axis and the T₂ relaxation time is represented on the Y axis was taken as the crosslinking index based on the premise that the greater the slope, the higher the molecular mobility, that is, there are fewer crosslinked structures restricting the movement of molecules, and the lower the slope, the lower the molecular mobility, that is, there are many crosslinked structures restricting the movement of molecules. The measurement temperatures of -40°C and 0°C were estimated by the Solid echo method, and the measurement temperatures of 23°C and 80°C were measured by the Spin echo method.

The T₂ relaxation time was measured under the following conditions.
Observation frequency: 25 MHz
Measurement method: Solid echo method / Spin echo method
Repeat time: 4 sec / 4 sec
Cumulative number of times: 16 times / 4 times
Measurement temperature: -40°C, 0°C / 23°C, 80°C

### 2. Examples 1 to 9 and Comparative Examples 1 to 6

### <Production of resin composition (pellets)>

Each component shown in Tables 2 to 6 was uniformly mixed in the proportions (parts by mass) shown in Tables 2 to 6 using a super mixer manufactured by Kawada Seisakusho. The resultant mixture was melted and shear mixed at a cylinder temperature of 200°C and a screw rotation speed of 120 rpm using a vented twin-screw extruder ("PCM-30" manufactured by Ikegai Corp.) with a screw diameter of 30 mm, a screw length of 760 mm, and a die nozzle diameter of 3.5 mm to produce resin composition pellets at a discharge rate of 10 kg/hour.

### <Average secondary particle size (nm) of core-shell elastomer>

The pellets obtained above were heat-treated for 4 hours in a hot air circulation dryer at a temperature of 80°C.

Next, the dried pellets were molded into an ASTM tensile test specimen (thickness 3.2 mm) having a weld portion in the center using an injection molder with the cylinder temperature set at 195°C and the mold temperature set at 90°C, and the prepared test specimen was subjected to a tensile test in accordance with ASTM D638 to measure weld elongation.

From this ASTM tensile test specimen, a test specimen for scanning electron microscopy (SEM) observation was cut out parallel to the flow direction during molding and including the weld portion using a diamond knife.

Osmium tetroxide was vapor-deposited on the observation surface of the obtained test specimen for SEM observation, and then an SEM image was acquired using a scanning electron microscope (SEM) .

From the obtained SEM image, the average value of the maximum length of the island-shaped portions derived from the elastomer was taken as the average secondary particle size of the elastomer.

The injection molder used was an EC-100S manufactured by Shibaura.

The vapor deposition of the osmium tetroxide was carried out under conditions of 8 mA for 60 seconds using an "Osmium Coater" manufactured by Meiwafosis. The scanning electron microscope used was a "Scanning Electron Microscope (SEM) S-4800" manufactured by Hitachi High Technologies. The SEM image was acquired under the following conditions: acceleration voltage 1 kV, a signal LA100 (U), emission current 6 µA, probe current: Normal.

### <Weld elongation>

The pellets obtained above were heat-treated for 4 hours in a hot air circulation dryer at a temperature of 80°C.

Next, the dried pellets were molded into an ASTM tensile test specimen (thickness 1.6 mm) having a weld portion in the center using an injection molder with the cylinder temperature set at 195°C and the mold temperature set at 90°C, and the prepared test specimen was subjected to a tensile test in accordance with ASTM D638 to measure weld elongation.

The injection molder used was an EC-100S manufactured by Shibaura Machine.

The results are shown in Tables 2 to 6 below. The unit is %.

### <Notched Charpy impact strength (kJ/m²)>

The pellets obtained above were heat-treated for 4 hours in a hot air circulation dryer at a temperature of 80°C.

Next, the dried pellets were molded into a multipurpose test specimen having a thickness of 4 mm at a mold temperature of 80°C and a cylinder temperature of 190°C, then a test specimen 80 mm in length × 10 mm in width × 4 mm in thickness was cut out using a notching tool manufactured by Toyo Seiki in accordance with ISO179-1, and a notch having a tip radius of r=0.25 mm was cut into the specimen.

The results are shown in Tables 2 to 6. The unit is kJ/m².

**[Table 2]**

| | Example 1 | Comparative Example 1 | Comparative Example 2 | Comparative Example 3 |
|---|---|---|---|---|
| F20-03 | 80 | 80 | 80 | 80 |
| F10-EW | | | | |
| A10-03 | | | | |
| F30-03 | | | | |
| M-910 | | | | |
| M-910 Washed product A | 20 | | | |
| M-910 Washed product B | | | | |
| M-910 Washed product C | | | | |
| EXL-2600 | | 20 | | |
| E-860A | | | 20 | |
| M-732 | | | | 20 |
| Discharge rate (kg/hr) | 10 | 10 | 10 | 10 |
| Rotation speed (rpm) | 120 | 120 | 120 | 120 |
| Core-shell elastomer crosslinking index | 0.26 | 0.21 | 0.11 | 0.24 |
| Average secondary particle size (nm) of core-shell elastomer | 110 | 220 | 200 | 300 |
| Potassium content in core-shell elastomer (% by mass) | 0.02 | ND | ND | 0.01 |
| Weld elongation (%) | 109 | 92 | 30 | 40 |
| Notched Charpy impact strength (kJ/m²) | 22 | 17 | 27 | 19 |

**[Table 3]**

| | Example 1 | Example 2 | Example 3 | Comparative Example 4 |
|---|---|---|---|---|
| F20-03 | 80 | 80 | 80 | 80 |
| F10-EW | | | | |
| A10-03 | | | | |
| F30-03 | | | | |
| M-910 | | | | 20 |
| M-910 Washed product A | 20 | | | |
| M-910 Washed product B | | 20 | | |
| M-910 Washed product C | | | 20 | |
| EXL-2600 | | | | |
| E-860A | | | | |
| M-732 | | | | |
| Discharge rate (kg/hr) | 10 | 10 | 10 | 10 |
| Rotation speed (rpm) | 120 | 120 | 120 | 120 |
| Core-shell elastomer crosslinking index | 0.26 | 0.26 | 0.26 | 0.26 |
| Average secondary particle size (nm) of core-shell elastomer | 110 | 110 | 110 | 110 |
| Potassium content in core-shell elastomer (% by mass) | 0.02 | 0.03 | 0.04 | 0.07 |
| Weld elongation (%) | 109 | 109 | 104 | 73 |
| Notched Charpy impact strength (kJ/m²) | 22 | 21 | 23 | 20 |

**[Table 4]**

| | Example 1 | Example 4 | Example 5 | Comparative Example 5 |
|---|---|---|---|---|
| F20-03 | 80 | | | |
| F10-EW | | 80 | | |
| A10-03 | | | 80 | |
| F30-03 | | | | 80 |
| M-910 | | | | |
| M-910 Washed product A | 20 | 20 | 20 | 20 |
| M-910 Washed product B | | | | |
| M-910 Washed product C | | | | |
| EXL-2600 | | | | |
| E-860A | | | | |
| M-732 | | | | |
| Discharge rate (kg/hr) | 10 | 10 | 10 | 10 |
| Rotation speed (rpm) | 120 | 120 | 120 | 120 |
| Core-shell elastomer crosslinking index | 0.26 | 0.26 | 0.26 | 0.26 |
| Average secondary particle size (nm) of core-shell elastomer | 110 | 110 | 110 | 2000 |
| Potassium content in core-shell elastomer (% by mass) | 0.02 | 0.02 | 0.02 | 0.02 |
| Weld elongation (%) | 109 | 105 | 120 | 20 |
| Notched Charpy impact strength (kJ/m²) | 22 | 24 | 26 | 13 |

**[Table 5]**

| | Example 1 | Example 6 | Example 7 |
|---|---|---|---|
| F20-03 | 80 | 75 | 70 |
| F10-EW | | | |
| A10-03 | | | |
| F30-03 | | | |
| M-910 | | | |
| M-910 Washed product A | 20 | 25 | 30 |
| M-910 Washed product B | | | |
| M-910 Washed product C | | | |
| EXL-2600 | | | |
| E-860A | | | |
| M-732 | | | |
| Discharge rate (kg/hr) | 10 | 10 | 10 |
| Rotation speed (rpm) | 120 | 120 | 120 |
| Core-shell elastomer crosslinking index | 0.26 | 0.26 | 0.26 |
| Average secondary particle size (nm) of core-shell elastomer | 110 | 110 | 110 |
| Potassium content in core-shell elastomer (% by mass) | 0.02 | 0.02 | 0.02 |
| Weld elongation (%) | 109 | 180 | 213 |
| Notched Charpy impact strength (kJ/m²) | 22 | 26 | 24 |

**[Table 6]**

| | Example 1 | Example 8 | Example 9 | Comparative Example 6 |
|---|---|---|---|---|
| F20-03 | 80 | 80 | 80 | 80 |
| F10-EW | | | | |
| A10-03 | | | | |
| F30-03 | | | | |
| M-910 | | | | |
| M-910 Washed product A | 20 | 20 | 20 | 20 |
| M-910 Washed product B | | | | |
| M-910 Washed product C | | | | |
| EXL-2600 | | | | |
| E-860A | | | | |
| M-732 | | | | |
| Discharge rate (kg/hr) | 10 | 10 | 10 | 10 |
| Rotation speed (rpm) | 120 | 250 | 100 | 70 |
| Core-shell elastomer crosslinking index | 0.26 | 0.26 | 0.26 | 0.26 |
| Average secondary particle size (nm) of core-shell elastomer | 110 | 110 | 110 | 500 |
| Potassium content in core-shell elastomer (% by mass) | 0.02 | 0.02 | 0.02 | 0.02 |
| Weld elongation (%) | 109 | 121 | 101 | 50 |
| Notched Charpy impact strength (kJ/m²) | 22 | 22 | 21 | 11 |

As is clear from the above results, the resin composition of this embodiment had high weld elongation and excellent impact resistance (Examples 1 to 9).

On the other hand, when the crosslinking index of the core-shell elastomer (B) was outside the range of 0.24 to 0.30 (Comparative Example 2), or when the crosslinking index satisfied the range of 0.24 to 0.30, but the average secondary particle size exceeded 250 nm (Comparative Example 3), weld elongation was low. Further, in the comparative example having a slightly higher crosslinking index, the weld elongation was slightly higher, but the Charpy impact strength was inferior (Comparative Example 1).

In addition, even when the crosslinking index and the average secondary particle size of the core-shell elastomer (B) were within the scope of the present invention, if the amount of the element potassium in the core-shell elastomer (B) was beyond the range of more than 0% by mass and not more than 0.05% by mass (Comparative Example 4), the weld elongation was low. In particular, as is clear from a comparison between Example 3 and Comparative Example 4, a significant difference in weld elongation was found when the amount of the element potassium in the core-shell elastomer (B) reached 0.05% by mass.

On the other hand, even when the crosslinking index and the amount of the element potassium of the core-shell elastomer (B) were within the scope of the present invention, if the average secondary particle size of the core-shell elastomer (B) was outside the scope of the present invention (Comparative Example 5), weld elongation and Charpy impact strength were poor.

## Claims

1. A resin composition comprising a polyacetal resin (A) and a core-shell elastomer (B), wherein
the core-shell elastomer (B) has a crosslinking index in a range of 0.24 to 0.30,
the core-shell elastomer (B) has an average secondary particle size of 10 to 250 nm in the polyacetal resin (A), and
an amount of element potassium in the core-shell elastomer (B) is more than 0% by mass and not more than 0.05% by mass.

2. The resin composition according to claim 1, wherein the polyacetal resin (A) has a melt volume rate (MVR) measured in accordance with ISO1133 at a temperature of 190°C and a load of 2.16 kg of 0.5 to 20 cm³/10 minutes.

3. The resin composition according to claim 1 or 2, wherein the resin composition has a core-shell elastomer (B) content of 5 to 40% by mass.

4. The resin composition according to claim 1 or 2, wherein the core-shell elastomer (B) has a butadiene unit content of 50 to 80% by mass.

5. The resin composition according to claim 1 or 2, wherein in the core-shell elastomer (B), the core comprises a butadiene-containing rubber and the shell comprises an acrylic resin.

6. The resin composition according to claim 1 or 2, wherein the core-shell elastomer (B) comprises a styrene unit.

7. The resin composition according to claim 1 or 2, wherein the core-shell elastomer (B) has a styrene unit content of more than 0% by mass and not more than 5% by mass.

8. The resin composition according to claim 1 or 2, wherein an amount of polyurethane included in the resin composition is 0 to 1% by mass.

9. The resin composition according to claim 1, wherein
the resin composition comprises a polyacetal resin (A) and a core-shell elastomer (B),
the core-shell elastomer (B) has a crosslinking index in a range of 0.24 to 0.30,
the core-shell elastomer (B) has an average secondary particle size of 10 to 250 nm in the polyacetal resin (A),
an amount of element potassium in the core-shell elastomer (B) is more than 0% by mass and not more than 0.05% by mass,
the polyacetal resin (A) has a melt volume rate (MVR) measured in accordance with ISO1133 at a temperature of 190°C and a load of 2.16 kg of 0.5 to 20 cm³/10 minutes,
the resin composition has a core-shell elastomer (B) content of 5 to 40% by mass,
the core-shell elastomer (B) has a butadiene unit content of 50 to 80% by mass,
in the core-shell elastomer (B), the core comprises a butadiene-containing rubber and the shell comprises an acrylic resin,
the core-shell elastomer (B) comprises a styrene unit,
the core-shell elastomer (B) has a styrene unit content of more than 0% by mass and not more than 5% by mass, and
an amount of polyurethane included in the resin composition is 0 to 1% by mass.

10. A pellet of a resin composition according to claim 1, 2, or 9.

11. A molded article formed from the resin composition according to claim 1, 2, or 9.

12. A molded article formed from a pellet according to claim 10.
